# EUROPÄISCHE PATENTSCHRIFT

(11) **EP 0 670 689 B1**
(45) Veröffentlichungstag und Bekanntmachung des Hinweises auf die Patenterteilung: **05.03.1997**
(21) Anmeldenummer: 94901880.8
(22) Anmeldetag: 26.11.1993
(51) Int. Cl.: A47J 36/08, A47J 36/12

(54) **GARGEFÄSS**
COOKING VESSEL
RECIPIENT DE CUISSON

(30) Priorität: 28.11.1992 DE 9216232 U
(43) Veröffentlichungstag der Anmeldung: 13.09.1995
(73) Patentinhaber: SYNKRONA AG, CH-6370 Stans (CH); SCHULTZ, Horst, D-65239 Hochheim (DE)
(72) Erfinder: SCHULTZ, Horst, D-65239 Hochheim (DE)
(74) Vertreter: Blumbach, Kramer & Partner
(86) Internationale Anmeldenummer: EP9303312
(87) Internationale Veröffentlichungsnummer: WO9412086

(56) Entgegenhaltungen:
- CH-A- 309 501
- DE-U- 9 216 232
- GB-A- J01 857
- US-A- 3 065 855

## Beschreibung

Die Erfindung betrifft ein Gargefäß nach dem Oberbegriff des Anspruchs 1.

Beim Gebrauch derartiger Gargefäße ist es oft nötig, erhitzte Flüssigkeiten abzugießen und dennoch feste Bestandteile der Speisen im Gefäß zurückzubehalten. Zur Lösung dieser Aufgabe existieren bereits diverse, zum Teil aufwendige Konstruktionen.

Die CH-PS 309 501 beschreibt einen Kochtopf mit einem Deckel, bei dem im oberen Randbereich des Topfes Ausgießtüllen und am Rand des Deckels Erhöhungen angebracht sind. Hierdurch ist es zwar möglich, Flüssigkeiten abzugießen, ohne daß dabei feste Substanzen mit ausgegossen werden, jedoch zeigt dieser Topf ein schlechtes Dichtverhalten. Modernere Garverfahren, wie z.B. wasserarmes Garen, bei welchen Flüssigkeitsverluste zu vermeiden sind, können bei diesem Topf nicht angewandt werden. Den gleichen Nachteil bieten eine Vielzahl von Gargefäßen, die das Abgießen mit einer seitlichen Tülle ermöglichen.

Dieser Nachteil wird bei einem aus der FR-PS 89 14570 bekannten Kochtopf zwar vermieden, jedoch werden hier komplizierte Randgeometrien sowohl für den Topf- als auch für den Deckelrand verwendet, die es erlauben, durch Verdrehen des Deckels relativ zum Topf die Größe einer Öffnung zwischen Deckel und Topf zu verändern. Aufgrund der Öffnungsgeometrie ist dieser Topf für bestimmtes Gargut nicht geeignet. Kleinere Partikel, wie etwa Reis, zwingen zu geringen Spaltbreiten, durch die das Abgießen bei der dann sehr kleinen Öffnung schwierig wird.

Die GB-A-1857 offenbart einen Deckel für eine Pfanne, der zwei sich gegenüberliegende Auflageoberflächenabschnitte am Rand aufweist. Durch Neigen des Deckels relativ zum Rand der Pfanne um die Auflageabschnitte entsteht zwischen Deckel und Pfanne eine Ausgießöffnung. Eine derartige verkippte und stets unsichere Haltung des Deckels in Abgießstellung kann insbesondere bei heißem Gargut eine erhebliche Gefährdung mit sich bringen.

Das in der internationalen Anmeldung mit der Veröffentlichungsnummer WO 90/09133 beschriebene Kochgefäß weist einen unrunden Topfkörper auf, der zu zwei Seiten hin Ausbauchungen enthält, die im geschlossenen Zustand des Kochgefäßes von einem kompliziert geformten Deckel abgedeckt werden. Dieser Deckel weist in seinem Randbereich zur Außenseite hin geöffnete Ausnehmungen auf, die beim Verdrehen des Deckels relativ zum Topf seitliche, zum Abgießen verwendbare Spalte erzeugen. Wegen des kompliziert geformten Randbereiches des Deckels und des Topfkörpers ist die Herstellung abdichtender Anlageflächen schwieriger und kostenaufwendiger als bei zylindrischen Gefäßen. Prüfungen durch unabhängige Institute haben nachgewiesen, daß bei derartigen Topfkonstruktionen die modernen, wasserarmen Garverfahren nicht anwendbar sind. Darüber hinaus ist die Stapelbarkeit dieses Topfes mit anderen, üblicherweine zylindrischen Kochgefäßen eingeschränkt.

Dementsprechend liegt der Erfindung die Aufgabe zugrunde, bei einem gattungsgemäßen Gargefäß das Abgießen von Flüssigkeiten bei gleichzeitigem Zurückhalten fester Substanzen durch eine preisgünstige, in der Handhabung sichere und einfach herstellbare Lösung zu ermöglichen, die den Gebrauch nicht erschwert oder behindert.

Diese Aufgabe wird durch die Merkmale des Anspruchs 1 gelöst.

Durch diese Lösung wird die Grundform des Gargefäßes in keiner Weise beeinflußt; zusätzliche Tüllen oder Ausbauchungen werden nicht benötigt. Die Anordnung der Erhebungen und Vertiefungen in den gegenüberliegenden Anlageflächen des Deckelteils und des oberen Randbereichs der Seitenwände beeinträchtigt die exakt dichtende Ausbildung der Anlageflächen nicht, da sowohl die Erhebungen als auch die Vertiefungen vergleichsweise klein sein können.

Obwohl die Erhebungen durch beliebige, formgebende Elemente herstellbar sind, wie z.B. durch Nieten oder Schrauben, besteht eine kostengünstige Lösung darin, während des Prägens des Deckelteils und des oberen Randbereiches der Seitenwände jeweils in den Anlageflächen Eindrückungen anzubringen. Die hierbei entstehenden, verrundeten Erhebungen und Vertiefungen sind mechanisch stabil und aufgrund der geringen Biegeradien einfach zu säubern. Die einfache Handhabung wird unterstützt, wenn die Erhebungen und Vertiefungen jeweils symmetrisch entlang der Anlageflächen verteilt sind und eine Anlagefläche mindestens drei Erhebungen und die andere Anlagefläche mindestens drei Vertiefungen aufweist. Hierdurch werden mehrere verschiedene Positionen des Deckelteils sowohl für die geschlossene als auch für die geöffnete Stellung ermöglicht.

Sowohl die Erhebungen als auch die Vertiefungen müssen nicht kreisrund sein, sondern können oval, sternförmig, mehreckig oder in der Form eines Firmenzeichens geprägt sein, so daß diese entweder in das Design des Gargefäßes einbezogen werden können oder die Anbringung eines im Sichtbereich liegenden Firmen- oder Warenzeichens ermöglicht wird.

Die Handhabung kann weiter vereinfacht werden und ein sicherer Sitz des Deckelteils auch bei erhöhter Dampfentwicklung gewährleistet werden, wenn die jeweiligen Anlageflächen relativ zu einer parallel zur Fläche des Bodens verlaufenden Ebene geneigt sind. Durch diese Neigung der Anlageflächen kommt es zu einem mechanisch stabilen Sitz zwischen den konisch verlaufenden Anlageflächen, der auch bei ungenau aufgesetztem Deckelteil eine selbstzentrierende Wirkung hat. Eine in radialer Richtung auswärts schräg nach oben verlaufende Neigung hat eine trichterartige Rücklauffunktion für Kondensat im Bereich der Anlageflächen; hierdurch kann zum Teil Flüssigkeitsverlust beim Sieden des Garguts vermieden werden.

Eine radial auswärts schräg nach unten verlaufende Neigung der Anlageflächen kann eine umlaufende Griffleiste definieren und die Sichtbarkeit von merkmalartig geformten Erhöhungen und Vertiefungen weiterhin verbessern.

Durch im Deckelteil und/oder im Randbereich der Seitenwände angeordnete Ausnehmungen, die vorzugsweise die Breite der Anlageflächen nicht überschreiten, kann durch Erhöhung des seitlichen Abstands zwischen dem Deckelteil und der Seitenwand die Durchflußmenge der Flüssigkeit beim Abgießen erhöht werden.

Mit an den Seitenwänden des Gargefäßes angebrachten Grifforganen, die Halteelemente zum Halten des Deckelteils aufweisen, kann die Sicherheit beim Abgießen erhöht werden. Beim Abgießen ist es dadurch nicht mehr nötig, das zumeist erwärmte Deckelteil mit den Händen zu berühren. Verbrühungen können somit vermieden werden. Bestehen die Halteelemente aus verschwenkbaren Bügeln oder Klappen, die jeweils in zurückgeschwenkter Stellung an einer Griffschale des Grifforgans anliegen und in vorgeschwenkter Stellung seitlich am Rand des Deckelteils punktförmig anliegen, ist eine einfache und ergonomische Handhabung möglich. Während der Daumen jeder Hand die Bügel oder Klappen in vorgeschwenkter Stellung hält, kann das Grifforgan mit den weiteren Fingern sicher gehalten werden. Die punktförmige Anlage am Rand des Deckelteils reduziert die Wärmeübertragung zwischen dem Deckelteil und den Halteelementen. Erstrecken sich die Bügel mit seitlichen Fortsätzen zumindest teilweise in Öffnungen des Grifforgans und weisen sie eine Elastizität auf, die eine zerstörungsfreie Deformation des Bügels für die Entnahme und die Anbringung des Bügels gestattet, wird hierdurch sowohl die Herstellung als auch die Reinigung des Gargefäßes erleichtert.

Bestehen die Halteelemente aus am Grifforgan verdrehbar befestigten Stegen, die jeweils in zurückgedrehter Stellung zumindest teilweise unterhalb oder in einer Griffschale des Grifforgans angeordnet sind und in nach vorne gedrehter Stellung einen Bereich des Deckelteils übergreifen, wird das Design des Grifforgans nicht durch das Halteelement beeinflußt. Wird der Steg oberhalb des Griffelementes angebracht, kann er als sichtbares, formgebendes Element ausgestaltet sein.

Mulden zur Aufnahme der Finger in der Griffschale sowie eine erhöhte Kuppe auf dem Steg vereinfachen die Bedienbarkeit.

Eine weitere dauerhafte und zuverlässig funktionierende Version der Halteelemente besteht aus Schiebern, die jeweils längsverschiebbar im Grifforgan gehalten sind. In zurückverschobener Stellung übergreifen oder untergreifen die Schieber einen Teil der Griffschale oder sind in der Griffschale aufgenommen.

Sämtliche erfindungsgemäßen Ausgestaltungen beschränken weder die Stapelbarkeit des Gargefäßes, noch wird die übliche Nutzung oder Anwendbarkeit von bestimmten Garverfahren beeinträchtigt. Wird der Deckel während des Garens in geöffneter Stellung verwendet, d.h. mit dem durch die Erhebungen gebildeten Schlitz zwischen den Anlageflächen, wird die Luftzufuhr zum Gargut unterstützt. Braten und Eindicken wird spritzgeschützt ermöglicht; beim Kochen kann die zugeführte kühlende Luft die Gefahr des Überkochens verringern.

Die Erfindung wird nachstehend anhand der beigefügten Figuren im einzelnen beschrieben.

Es zeigen:
- Fig. 1: eine Querschnittsdarstellung eines Teils des erfindungsgemäßen Gargefäßes entlang der Linie A-A aus Fig. 2,
- Fig. 2: eine Aufsicht auf einen Randbereich des Deckelteils mit durchbrochener Darstellung der in den Vertiefungen angeordneten Erhebungen,
- Fig. 3a, 3b: Querschnittsdarstellungen entlang der Ebene A-A aus Fig. 2 von Teilen von Gargefäßen mit geneigten Anlageflächen,
- Fig. 4a, 4b: Teile von in Fig. 3a, 3b dargestellten Gargefäßen mit jeweils aufgesetztem Deckelteil,
- Fig. 5: eine Aufsicht von oben auf ein erstes Ausführungsbeispiel eines Grifforgans mit einem daran angebrachten Halteelement,
- Fig. 6: eine Seitenansicht des ersten Ausführungsbeispiels des Grifforgans mit daran angebrachtem Halteelement,
- Fig. 7: eine teilweise Querschnittsdarstellung eines weiteren Ausführungsbeispiels eines Grifforgans mit daran befestigtem Halteelement,
- Fig. 8: eine Seitenansicht eines weiteren erfindungsgemäßen Ausführungsbeispiels eines Grifforgans mit daran befestigtem Halteelement,
- Fig. 9: eine Aufsicht von oben auf das in Figur 8 dargestellte Grifforgan mit daran befestigtem Halteelement,

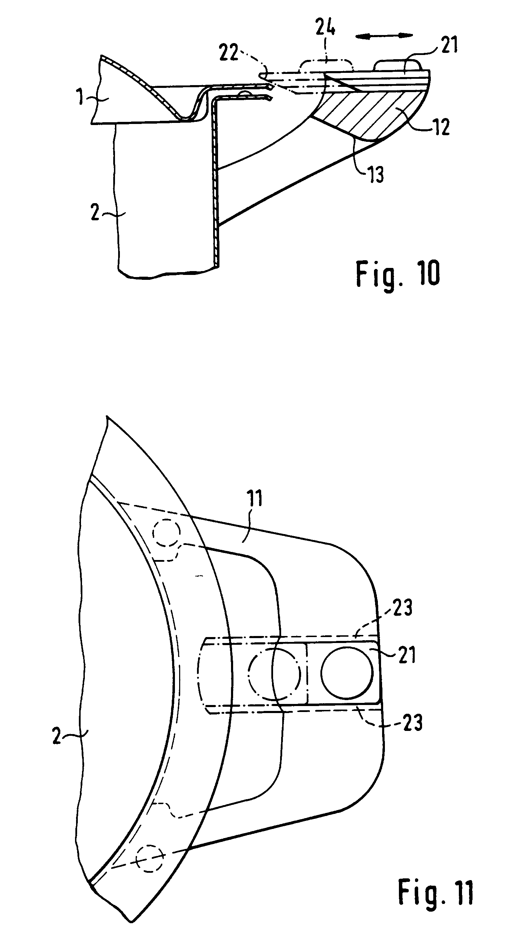

- Fig. 10: eine teilweise Querschnittsdarstellung eines weiteren erfindungsgemäßen Ausführungsbeispiels eines Grifforgans mit daran befestigtem Halteelement,
- Fig. 11: eine Aufsicht von oben auf das in Fig. 10 dargestellte Grifforgan mit daran befestigtem Halteelement.

Das Gargefäß besteht im wesentlichen aus einem Deckelteil 1 und einem Gefäßunterteil 2 mit zylindrischen Seitenwänden 3 und einem kreisförmigem ebenen Boden 4.

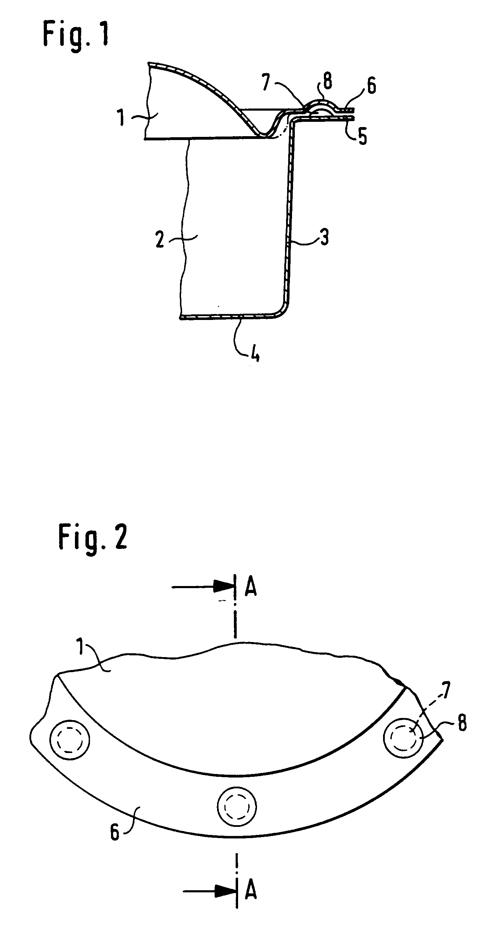

Die in Fig. 1 teilweise im Querschnitt dargestellte Seitenwand 3 weist in ihrem oberen Randbereich eine sich radial auswärts erstreckende Erweiterung auf, deren Oberseite eine im wesentlichen ebene Anlagefläche 5 ausbildet. Das Deckelteil 1 weist ebenfalls radiale Erweiterungen auf; hierbei bildet die im wesentlichen ebene Unterseite der radialen Erweiterung die Anlagefläche 6. Im geschlossenen Zustand des Gargefäßes stehen die Anlageflächen 5, 6 in mechanischem Kontakt, und der zwischen diesen verbleibende Abstand ist durch den wechselseitigen Formschluß so gering gehalten, daß bereits geringe Mengen an verdampfter Flüssigkeit einen das Gargefäß abdichtenden Kondensatfilm entstehen lassen.

In der Anlagefläche 5 sind Erhebungen 7 ausgebildet, die symmetrisch über den Kreisumfang verteilt sind. Mit deckungsgleicher Anordnung sind in der Anlagefläche 6 Vertiefungen 8 ausgebildet, die im geschlossenen Zustand des Gargefäßes die Erhebungen 7 vollständig aufnehmen.

Sowohl die Erhebungen 7 als auch die Vertiefungen 8 sind durch beim Prägen des Gargefäßes hergestellte Eindrückungen gebildet.

In den beschriebenen Ausführungsbeispielen stehen die Erhebungen 7 jeweils von der Anlagefläche 5 des Gefäßunterteils 2 hervor. Die Erhebungen können jedoch auch in der Anlagefläche 6 des Deckelteils 1 und die Vertiefungen 8 in der Anlagefläche 5 des Gefäßunterteils 2 angeordnet sein. Beliebige Kombinationen von Erhebungen und Vertiefungen in den jeweiligen Anlageflächen 5, 6 sind ebenfalls herstellbar.

Bei einem weiteren, in den Figuren nicht dargestellten Ausführungsbeispiel sind zwei- oder dreimal mehr Vertiefungen 8 als Erhebungen 7 vorhanden. Die Vertiefungen 8 weisen jeweils gruppenweise in Drehrichtung versetzt eine zunehmende Tiefe auf. Hierdurch können bei entsprechend verdrehtem Aufsetzen des Deckelteils zwischen der Anlagefläche 5 und der Anlagefläche 6 Spalte verschiedener Breite erzeugt werden.

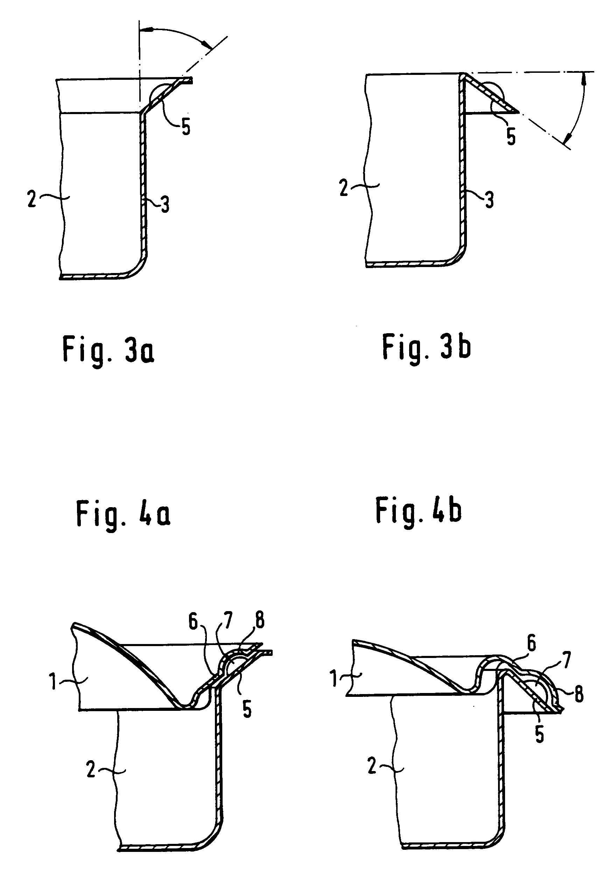

In den Fig. 3a und 3b sind Gefäßunterteile 2 dargestellt, deren Anlagefläche 5 eine vom rechten Winkel abweichende Neigung relativ zur Seitenwand 3 aufweisen. Der Neigungswinkel ist jeweils durch zwei mit einer gekrümmten Linie verbundene Pfeile symbolisiert und kann in dem in Fig. 3a dargestellten Ausführungsbeispiel im Bereich von 15° bis 90° liegen. Der Neigungswinkel des in Fig. 3b dargestellten Ausführungsbeispiels kann zwischen 0° und 45° liegen.

Die Deckelteile weisen, jeweils zu dem Ausführungsbeispiel passend, Anlageflächen 6 auf, die im wesentlichen den gleichen Neigungswinkel wie die Anlageflächen 5 haben.

Wie in den Fig. 4a und 4b dargestellt, entsteht durch die geneigten Anlageflächen 5, 6 ein konischer Sitz für das Deckelteil 1 im Unterteil 2, der beim Schließen eine führende und selbstzentrierende Wirkung hat.

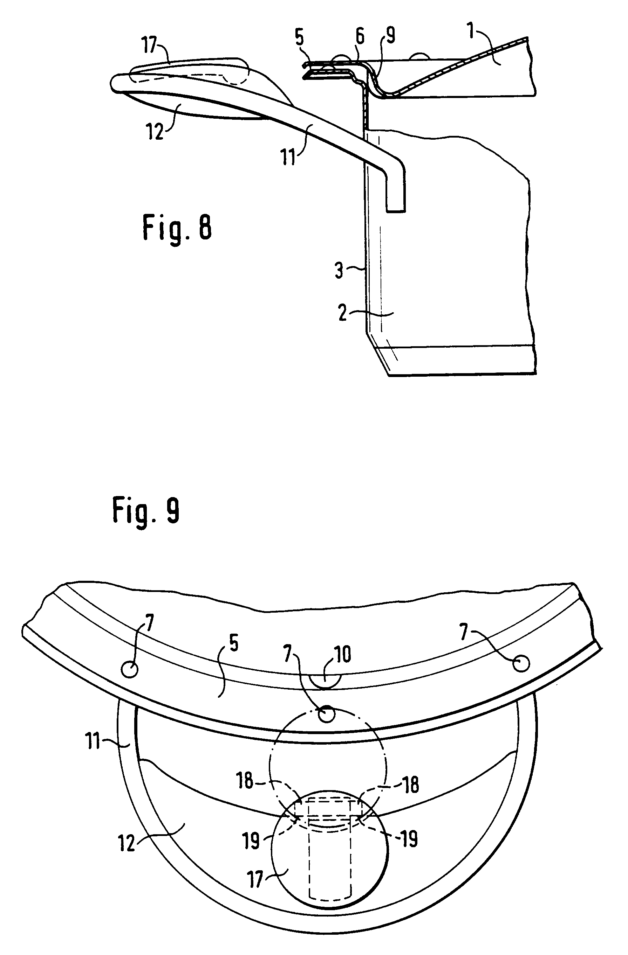

Zusätzlich können, wie in Fig. 8 und 9 dargestellt, sowohl das Deckelteil 1 als auch der Randbereich der Seitenwände 3 Ausnehmungen 9, 10 aufweisen, welche die Breite der Anlageflächen 5, 6 nicht überschreiten und den seitlichen Abstand zwischen dem Deckelteil 1 und der Seitenwand 3 lokal erhöhen. Der durch die Ausnehmungen 9, 10 gebildete Freiraum vergrößert den für die Flüssigkeit, für austretenden Dampf oder für zuströmende Luft zur Verfügung gestellten Strömungskanal und verbessert das Abgießverhalten. Die Ausnehmungen 9, 10 wirken sich jedoch wegen ihrer relativ geringen Größe beim Stapeln und bei der Herstellung nicht nachteilig aus. In weiterer Ausgestaltung kann das Deckelteil 1 anstelle oder zusätzlich zu den Ausnehmungen 9 in den Figuren nicht dargestellte Nasen aufweisen, die in die Ausnehmungen 10 eingreifen und in geöffneter Stellung des Deckelteils 1 einen verdrehsicheren Sitz des Deckelteils 1 auf dem Unterteil 2 gewährleisten.

An den Seitenwänden 3 sind an sich gegenüberliegenden Seiten Grifforgane 11 angebracht, die sich in Form von U-förmigen Bügeln seitlich schräg nach oben erstrecken. Im Bereich des mittigen Schenkels des Grifforgans 11 ist eine Griffschale 12 angebracht, die an ihrer Unterseite vorzugsweise Mulden 13 zur Aufnahme von Fingern enthält.

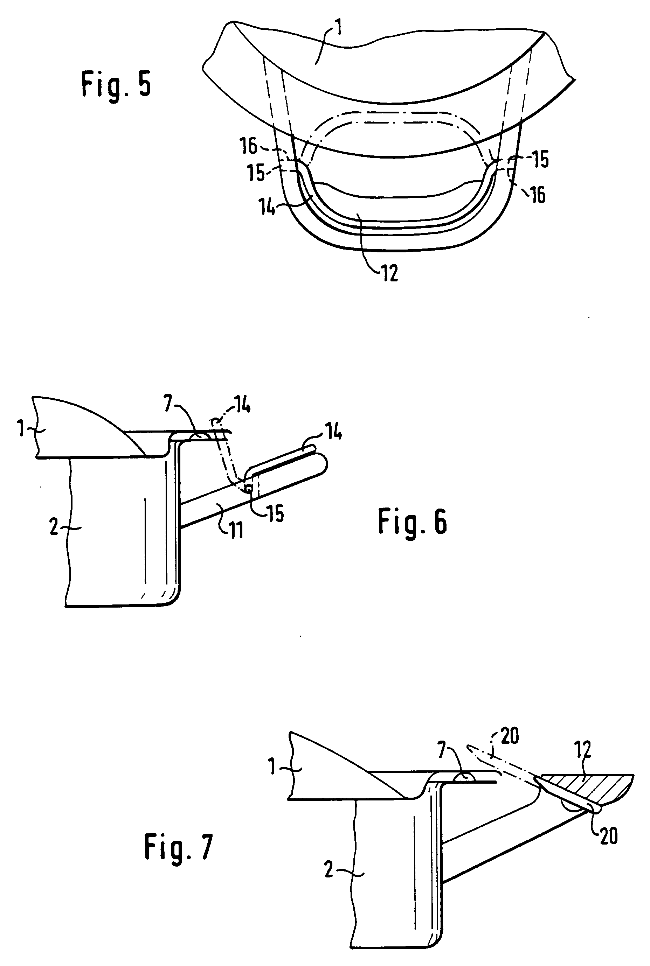

Bei einem ersten Ausführungsbeispiel erstreckt sich ein verschwenkbarer Bügel quer durch das Grifforgan 11 und liegt in zurückgeschwenkter Stellung von oben an der Griffschale 12 an. Der Bügel 14 erstreckt sich mit seitlichen Fortsätzen 15 schwenkbar in Öffnungen 16, die in den im wesentlichen parallel verlaufenden Schenkeln des Grifforgans 11 angeordnet sind. Der Bügel 14 weist eine Elastizität auf, welche die zerstörungsfreie Entnahme und Anbringung des Bügels 14 am Grifforgan 11 gestattet. Wie in den Fig. 5 und 6 dargestellt, übergreift der Bügel 14 in nach vorn verschwenkter Stellung einen Randbereich des Deckelteils 1 und hält dieses fest am Gefäßunterteil 2.

Bei dem in den Fig. 8 und 9 dargestellten Ausführungsbeispiel ist eine Klappe 17 verschwenkbar an der Griffschale 12 des Grifforgans 11 gehalten. Seitliche Fortsätze 18 der Klappe 17 erstrecken sich in Öffnungen 19 der Griffschale 12 und bilden die Schwenkachse, um welche die Klappe 17 verschwenkbar ist. Die Funktion der Klappe 17 stimmt im wesentlichen mit der des Bügels 14 überein, die Klappe 17 besteht jedoch vorzugsweise aus einem gering wärmeleitenden Material.

In einem weiteren, in Fig. 7 dargestellten Ausführungsbeispiel ist an der Griffschale 12 ein Steg 20 verdrehbar befestigt, der in zurückgedrehter Stellung unterhalb der Griffschale 12 angeordnet ist. In dieser Stellung ist der Steg 20 von oben her nicht zu sehen und beeinflußt das Design des Grifforgans 11 nicht. In der nach vorn verschwenkten Stellung, die in Fig. 7 durch eine strichpunktierte Linie dargestellt ist, übergreift der Steg 20 einen Randbereich des Deckelteils 1 derart, daß das Deckelteil 1 fest am Gefäßunterteil gehalten ist.

In weiterer erfindungsgemäßer Ausgestaltung ist der Steg auf der Oberseite der Griffschale 12 befestigt und bildet einen Teil des Designs des Grifforgans 11 oder ist derart in der Griffschale 12 gehalten, daß er in zurückgedrehter Stellung sowohl von der Oberseite als auch von der Unterseite her durch die Griffschale 12 abgedeckt ist.

In einem weiteren Ausführungsbeispiel sind am Grifforgan 11 längsverschiebbar gehaltene Schieber 21 angeordnet, die jeweils in zurückverschobener Stellung einen Teil der Griffschale 12 übergreifen. Der Schieber 21 ist auf beiden Längsseiten in einer Schwalbenschwanzführung 23 der Griffschale 12 geführt und weist auf seiner Oberseite eine erhöhte Kuppe 24 auf.

Die Vorderkante 22 des Schiebers 21 ist angeschrägt und gestattet in der nach vorn verschobenen Stellung des Schiebers 21 die feinfühlige Anpassung der auf den Randbereich des Deckelteils 1 ausgeübten Haltekräfte. Zusätzlich kommt es in dieser Stellung durch den Kraftschluß zwischen dem Schieber 21 und den Deckelteil 1 zu einem sicheren selbsthaltenden Sitz des Schiebers 21 in der Schwalbenschwanzführung 23.

Alternativ ist der Schieber 21 in zurückverschobener Stellung unterhalb der Griffschale 12 angeordnet oder ist in der Griffschale 12 aufgenommen.

Obwohl in den vorstehend beschriebenen Ausführungsbeispielen generell von einem Gefäßunterteil 2 mit zylindrischen Seitenwänden 3 und einem kreisförmigen Boden 4 ausgegangen wurde, ist die Erfindung auch bei nicht zylindrischen Gefäßen und bei Gefäßunterteilen mit schrägen Seitenwänden, wie z.B. Pfannen, Brätern oder asiatischen Wok's, anwendbar, solange die Symmetrie des Unterteils und des Deckelteils das korrekte Aufsetzen des Deckelteils in mehr als einer Stellung gestattet.

## Patentansprüche

1. Gargefäß mit einem Boden und sich an diesen anschließenden Seitenwänden und einem den Innenraum des Gargefäßes im oberen Randbereich der Seitenwände abschließenden abnehmbaren Deckelteil, bei dem der obere Randbereich und das Deckelteil jeweils umlaufende, zueinander im wesentlichen deckungsgleiche Anlageflächen enthalten,
**wobei** in den Anlageflächen (5, 6) jeweils Erhebungen (7) und Vertiefungen (8) angeordnet sind, wobei im geschlossenen Zustand die Erhebungen (7) in Vertiefungen (8) eingreifen und bei einer Verdrehung des Deckelteils (1) aus er geschlossenen Stellung die Erhebungen (7) an der gegenüberliegenden Anlagefläche (6) anliegen und zwischen beiden Anlageflächen (5, 6) einen Spalt definieren
dadurch gekennzeichnet,
**daß eine Anlagefläche (5, 6) mindestens drei Erhebungen (7) oder Vertiefungen (8) aufweist.**

2. Gargefäß nach Anspruch 1,
dadurch gekennzeichnet,
daß die Erhebungen (7)-und Vertiefungen (8) jeweils aus Eindrückungen in den Anlageflächen (5, 6) gebildet sind.

3. Gargefäß nach Anspruch 1 oder 2,
dadurch gekennzeichnet,
daß die Erhebungen (7) und Vertiefungen (8) jeweils symmetrisch entlang der Anlageflächen (5, 6) verteilt sind.

4. Gargefäß nach Anspruch 1, 2 oder 3,
dadurch gekennzeichnet,
daß die jeweiligen Anlageflächen (5, 6) relativ zu einer parallel zur Fläche des Bodens (4) verlaufenden Ebene geneigt sind.

5. Gargefäß nach einem der vorstehenden Ansprüche,
dadurch gekennzeichnet,
daß im Deckelteil (1) und/oder im Randbereich der Seitenwände (3) Ausnehmungen (9, 10) angeordnet sind, welche die Breite der Anlageflächen (5, 6) nicht überschreiten und den seitlichen Abstand zwischen dem Deckelteil (1) und der Seitenwand (3) lokal erhöhen.

6. Gargefäß nach einem der vorstehenden Ansprüche,
dadurch gekennzeichnet,
daß an den Seitenwänden (3) Grifforgane (11) angebracht sind, die Halteelemente (14, 17, 20, 21) zum Halten des Deckelteils (1) aufweisen.

7. Gargefäß nach einem der vorstehenden Ansprüche,
dadurch gekennzeichnet,
daß die Halteelemente aus verschwenkbaren Bügeln (14) oder Klappen (17) bestehen, die jeweils in zurückgeschwenkter Stellung an einer Griffschale (12) des Grifforgans (11) anliegen und in vorgeschwenkter Stellung seitlich am Rand des Deckelteils (1) punktförmig anliegen.

8. Gargefäß nach Anspruch 7,
dadurch gekennzeichnet
daß sich die Bügel (14) mit seitlichen Fortsätzen (15) zumindest teilweise in Öffnungen (16) des Grifforgans (11) erstrecken und eine Elastizität aufweisen, welche durch eine zerstörungsfreie Deformation des Bügels (14) die Entnahme und Anbringung des Bügels (14) am Grifforgan (11) gestattet.

9. Gargefäß nach Anspruch 6,
dadurch gekennzeichnet,
daß die Halteelemente aus am Griff.organ (11) verdrehbar befestigten Stegen (20) bestehen, die jeweils in zurück gedrehter Stellung zumindest teilweise unterhalb, oberhalb oder in einer Griffschale (12) des Grifforgans (11) angeordnet sind und in nach vorn gedrehter Stellung einen Bereich des Deckelteils (1) übergreifen.

10. Gargefäß nach Anspruch 6,
dadurch gekennzeichnet,
daß die Halteelemente aus längsverschiebbar am Grifforgan (11) gehaltenen Schiebern (21) bestehen, die jeweils in zurück verschobener Stellung einen Teil der Griffschale (12) übergreifen oder untergreifen oder in der Griffschale (12) aufgenommen sind und in nach vorn verschobener Stellung einen Bereich des Deckelteils (1) übergreifen.

## Claims

1. A cooking vessel comprising a base and adjoining side walls and a removable lid part closing the interior of the cooking vessel in the top edge zone of the side walls, in which vessel the top edge zone and the lid part each contain peripheral substantially coincident abutment surfaces, wherein projections (7) and recesses (8) are disposed in the respective abutment surfaces (5, 6), wherein in the closed state the projections (7) engage in recesses (8) and on rotation of the lid part (1) from the closed position the projections (7) abut the opposite abutment surface (6) and define a gap between the two abutment surfaces (5, 6), characterised in that an abutment surface (5, 6) comprises at least three projections (7) or recesses (8).

2. A cooking vessel according to claim 1, characterised in that the projections (7) and recesses (8) are each formed from indentations in the abutment surfaces (5, 6).

3. A cooking vessel according to claim 1 or 2, characterised in that the projections (7) and recesses (8) are respectively distributed symmetrically along the abutment surfaces (5, 6).

4. A cooking vessel according to claim 1, 2 or 3, characterised in that the respective abutment surfaces (5, 6) are inclined in relation to a plane extending parallel to the surface of the base (4).

5. A cooking vessel according to any one of the preceding claims, characterised in that clearances (9, 10) are provided in the lid part (1) and/or in the edge zone of the side walls (3) and do not exceed the width of the abutment surfaces (5, 6) and locally increase the lateral distance between the lid part (1) and the side wall (3).

6. A cooking vessel according to any one of the preceding claims, characterised in that handle means (11) are provided on the side walls (3) and comprise retaining elements (14, 17, 20, 21) for retaining the lid part (1).

7. A cooking vessel according to any one of the preceding claims, characterised in that the retaining elements consist of pivotable yokes (14) or flaps (17) which in the pivoted-back position respectively abut a shell (12) of the handle means (11) and in the pivoted-forward position bear in point contact laterally against the edge of the lid part (1).

8. A cooking vessel according to claim 7, characterised in that the yokes (14) extend by lateral extensions (15) at least partially in openings (16) in the handle means (11) and have an elasticity which by non-destructive deformation of the yoke (14) enables the yoke (14) to be removed from and fitted to the handle means (11).

9. A cooking vessel according to claim 6, characterised in that the retaining elements consist of webs (20) pivotably fixed on the handle means (11) and respectively disposed, in the pivoted-back position, at least partially below, above or in a shell (12) of the handle means (11) and, in the forward-pivoted position, engage over a zone of the lid part (1).

10. A cooking vessel according to claim 6, characterised in that the retaining elements consist of slides (21) retained for longitudinal displacement on the handle means (11) and respectively in the slid-back position engage over or below part of the shell (12) or are received in the shell (12) and, in the forwardly slid position, engage over a zone of the lid part (1).

## Revendications

1. Récipient de cuisson avec un fond et des parois latérales qui se raccordent sur celui-ci et un couvercle amovible qui ferme l'espace intérieur du récipient de cuisson dans la zone du bord supérieur des parois latérales, dans lequel la zone du bord supérieur et le couvercle comprennent respectivement des surfaces d'appui périphériques qui coïncident pour l'essentiel l'une avec l'autre, caractérisé en ce que des bosses (7) et des creux (8) sont respectivement disposés dans les surfaces d'appui (5, 6), les bosses (7) et les creux (8) s'engrenant en position fermée, les bosses (7) reposent sur la surface d'appui opposée (6) et définissent un espace entre les deux surfaces d'appui (5, 6) lors d'une rotation du couvercle (1) à partir de la position fermée, caractérisé en ce qu'une surface d'appui (5, 6) présente au moins trois bosses (7) ou trois creux (8).

2. Récipient de cuisson selon la revendication 1, caractérisé en ce que les bosses (7) et les creux (8) sont respectivement formés à partir d'empreintes dans les surfaces d'appui (5, 6).

3. Récipient de cuisson selon l'une quelconque des revendications 1 ou 2, caractérisé en ce que les bosses (7) et les creux (8) sont respectivement répartis de façon symétrique le long des surfaces d'appui (5, 6).

4. Récipient de cuisson selon la revendication 1, 2 ou 3, caractérisé en ce que les surfaces d'appui (5, 6) respectives sont inclinées par rapport à un plan qui s'étend parallèle à la surface du fond (4).

5. Récipient de cuisson selon l'une quelconque des revendications précédentes, caractérisé en ce qu'il est disposé dans le couvercle (1) et/ou dans la zone du bord des parois latérales (3), des évidements (9, 10) qui ne dépassent pas la largeur des surfaces d'appui (5, 6) et qui augmentent localement l'espace latéral entre le couvercle (1) et la paroi latérale (3).

6. Récipient de cuisson selon l'une quelconque des revendications précédentes, caractérisé en ce que sur les parois latérales (3), il est disposé des organes de préhension (11) qui présentent des éléments de retenue (14, 17, 20, 21) pour le maintien du couvercle (1).

7. Récipient de cuisson selon l'une quelconque des revendications précédentes, caractérisé en ce que les éléments de retenue sont composés d'étriers (14) ou de clapets (17) pivotants qui reposent respectivement sur une coque de poignée (12) d'un organe de préhension (11) en position de pivotement en arrière et latéralement sur le bord du couvercle (1) de façon ponctuelle en position de pivotement en avant.

8. Récipient de cuisson selon la revendication 7, caractérisé en ce que les étriers (14) s'étendent du moins partiellement avec des prolongements latéraux (15) dans des ouvertures (16) de l'organe de préhension (11) et présentent une élasticité qui, par une déformation non destructive de l'étrier (14), autorise l'enlèvement et la mise en place de l'étrier (14) sur l'organe de préhension (11).

9. Récipient de cuisson selon la revendication 6, caractérisé en ce que les éléments de retenue sont composés de barrettes (20) fixées pivotantes sur l'organe de préhension (11) et qui sont disposées respectivement au moins partiellement en dessous, au-dessus ou dans une coque de poignée (12) de l'organe de préhension (11) en position de rotation en arrière et qui prennent une zone du couvercle (1) par le dessus en position de rotation vers l'avant.

10. Récipient de cuisson selon la revendication 6, caractérisé en ce que les éléments de retenue sont composés de curseurs (21) qui peuvent coulisser longitudinalement maintenus sur l'organe de préhension (11) et qui chacun prennent par le dessus ou par le dessous une partie de la coque de poignée (12) ou qui sont logés dans la coque de poignée (12) en position de décalage vers l'arrière et qui prennent une zone du couvercle (1) par le dessus en position de décalage vers l'avant.
